# EUROPÄISCHE PATENTSCHRIFT

(11) **EP 1 973 824 B1**
(45) Veröffentlichungstag und Bekanntmachung des Hinweises auf die Patenterteilung: **05.12.2012**
(21) Anmeldenummer: 07700058.6
(22) Anmeldetag: 04.01.2007
(51) Int. Cl.: B65H 7/12, B25J 13/08, B21D 43/24, B21D 43/10, B21D 43/11, B25J 5/02, B25J 9/04

(54) **BIEGEPRESSE MIT BESCHICKUNGSEINRICHTUNG UND VERFAHREN ZU DEREN BETRIEB**
BENDING PRESS HAVING A LOADING DEVICE AND METHOD FOR OPERATING IT
PRESSE DE CINTRAGE DOTÉE D'UN DISPOSITIF D'ALIMENTATION ET PROCÉDÉ POUR SON UTILISATION

(30) Priorität: 19.01.2006 AT 822006
(43) Veröffentlichungstag der Anmeldung: 01.10.2008
(73) Patentinhaber: Trumpf Maschinen Austria GmbH & CO. KG., 4061 Pasching (AT)
(72) Erfinder: THEIS, Helmut, A-4540 Pfarrkirchen (AT); WALTER, Otto, A-4614 Marchtrenk (AT); STRASSER, Hagen, A-4061 Pasching (AT)
(74) Vertreter: Burger, Hannes
(86) Internationale Anmeldenummer: PCT/AT2007/000001
(87) Internationale Veröffentlichungsnummer: WO 2007/082323

(56) Entgegenhaltungen:
- WO-A-03/095125
- WO-A-2004/028939
- JP-A- 8 094 424
- JP-A- 62 059 826
- US-A- 4 971 515

## Beschreibung

Die Erfindung betrifft eine Fertigungseinrichtung, wie sie im Oberbegriff des Anspruches 1 beschrieben ist, sowie ein Verfahren, wie im Oberbegriff des Anspruches 10 beschrieben.

Die WO 03/095125 A2 bezieht sich auf eine Fertigungseinrichtung, insbesondere Biegepresse, und ein Verfahren zum Betrieb der Fertigungseinrichtung für die Biegeumformung von Platinen mit einer Biegepresse, mit einem feststehenden Tischbalken und einem mit einer Antriebsanordnung relativ zum Tischbalken in Führungen an einem Maschinengestell verstellbaren Pressenbalken zwischen Biegewerkzeugen. Die Werkteilmanipulation erfolgt mittels eines Knickarm-Manipulators, der an einem distalen Ende der Knickarm-Anordnung eine Dreheinheit mit einer zu den Schwenkachsen der Knickarm-Anordnung senkrecht verlaufenden Drehachse aufweist und mit einer an der Dreheinheit angeordneten Greifeinrichtung. Die Knickarm-Anordnung weist zumindest eine, mit einer Steuer- und Überwachungseinrichtung kommunikationsverbundene Erfassungseinrichtung für eine Identifizierung und Lageerkennung der auf einer Ablage- bzw. Zuführeinrichtung bereit gelegten bzw. zugeführten Platinen auf.

Aus dem Dokument US 4,971,515 A ist ein Manipulator mit einer Greifeinrichtung zum Aufnehmen von Werkteilen von einem Stapel und deren Zufuhr zu einer Fertigungseinrichtung bekannt, wobei die Hubeinrichtung eine Messeinheit, zur Ermittlung eines Wertes eines wählbaren Parameters, z.B. der Dicke, des Werkteils aufweist und der in einem automatisierten Verfahrensschritt mit einem vorgegebenen Parameter- Referenzwert durch eine Kontrolleinrichtung verglichen wird.

Aus der WO 2004/028939 A1 ist eine automatisierte Fertigungseinrichtung, insbesondere Biegepresse, mit einem Manipulator für den Werkteiltransfer zwischen einer Werkteilablage und/oder Zuführvorrichtung und der Biegepresse bekannt. Der Manipulator ist mit einer Greifeinrichtung versehen. Die Greifeinrichtung weist eine Erfassungseinrichtung auf mit der festgestellt wird ob ein oder mehrere Platinen oder Werkteile aufgenommen wurden. Die Erfassung kann dabei durch Auswertung eines Schwingungsspektrum nach einer Schwingungsanregung der Platine bzw. des Werkteils erfolgen oder durch unmittelbar den Sauggreifern zugeordnete Drucksensoren erfolgen.

Weiter sind aus dem Stand der Technik Maßnahmen zu einer Vereinzelung durch eine Vorseparierung eines aufzunehmenden Werkteils, z.B. mittels Spreizmagnete, oder die Anwendung von bildverarbeitenden Messeinrichtungen zur Feststellung der Anzahl der aufgenommenen Bleche bekannt. Auch ist der Einsatz taktiler, induktiver oder kapazitiver Sensoren mit entsprechendem Messaufbau zur Erkennung, ob eine einzelne Platine oder durch Anhaftung mehrere Platinen aufgenommen wurden, bekannter Stand der Technik.

Bekannt ist auch der Einsatz einer mit der Steuereinrichtung der Fertigungseinrichtung kommunikationsverbundenen Palettenwaage, mittels der jeweils nach Aufnahme einer Platine oder einem Werkteil das Gesamtgewicht des verbleibenden Stapels ermittelt und vom Rechner der Steuereinrichtung der Differenzwert zur vorhergehenden Messung ermittelt wird und mit diesem Differenzwert eine Plausibilitätsprüfung mit einem hinterlegen Referenzwert vorgenommen wird.

Aufgabe der Erfindung ist es eine Fertigungseinrichtung für die vollautomatisierte Fertigung von Blechformteilen zu schaffen, bei der unmittelbar nach Aufnahme eines Werkteils von einer Greifeinrichtung eines Manipulators durch Ermittlung eines physikalischen Werts eine Plausibilitätsprüfung mit einem vorgegebenen, in einer Steuereinrichtung der Fertigungseinrichtung hinterlegten Referenzwert erfolgt.

Diese Aufgabe der Erfindung wird durch die im Kennzeichenteil des Anspruches 1 wiedergegebenen Merkmalen erreicht. Der überraschende Vorteil dabei ist, dass durch eine in die Kinematik des Manipulators integriert angeordnete Erfassungseinrichtung unabhängig von Materialeigenschaften des aufgenommenen Werkteils die Prüfung unmittelbar bei Aufnahme des Werkteils erfolgt und dadurch unproduktive und kostenintensive Nebenzeiten wirkungsvoll vermieden werden und mit einem Erfassungsvorgang gleichzeitig mehrere Messergebnisse zur Auswertung eines Durchschnittswertes vorliegen, wodurch unabhängig von einer etwaigen exzentrischen Aufnahme einer Platine bzw. eines Werkteils eine Bewertung und Vergleich mit einem vorgegebenen Referenzwert möglich ist.

Vorteilhaft ist aber auch eine Ausbildung nach Anspruch 2, wodurch die erforderliche Genauigkeit zur Bewertung des Messergebnisses erreicht wird.

Vorteilhaft ist dabei eine Ausbildung nach Anspruch 3, womit ein hochempfindliches Messelement zur Verfügung steht, dessen Integration in eine zu vermessende Struktur bei geringem Zusatzaufwand möglich ist.

Vorteilhaft ist aber auch eine Ausbildung nach Anspruch 4, weil damit die Messwerterfassung unter weitestgehender Vermeidung von Störeinflüssen durch die Struktur sehr nahe an der Greifeinrichtung und damit im Nahefeld des von der Greifeinrichtung aufgenommenen, zu bewertenden Gegenstand vorgesehen werden kann.

Gemäß den vorteilhaften Weiterbildungen, wie in den Ansprüchen 5 und 6 beschrieben, werden keine zusätzlichen aufwendigen Auf- bzw. Anbauteile erforderlich wodurch eine sehr wirtschaftliche Lösung erreicht wird.

Weiter kennzeichnet der Anspruch 7 eine vorteilhafte Anordnung der Messelemente, die eine eindeutige Auswertung mehrerer in einem Messvorgang ermittelter Messergebnisse ermöglicht.

Schließlich sind aber auch Ausbildungen nach den Ansprüchen 8 und 9 vorteilhaft, wodurch die Messanordnung bei geringem Leitungs- und Steuerungsaufwand an das Steuerungssystem der Fertigungseinrichtung angebunden werden kann.

Die Erfindung betrifft aber auch ein Verfahren zum Betrieb einer Fertigungseinrichtung, wie es im Oberbegriff des Anspruches 10 beschrieben ist.

Aufgabe des erfindungsgemäßen Verfahrens ist es, für den Betrieb einer Fertigungseinrichtung, insbesondere Biegepresse, welche mittels einer Handlingeinrichtung mit zur Umformung vorgesehenen Platinen bzw. Werkteile beschickt wird, sicherzustellen, dass nicht gleichzeitig mehrere Platinen oder Werkteile aufgenommen den Umformwerkzeugen zugeführt werden.

Diese Aufgabe der Erfindung wird durch die kennzeichnenden Maßnahmen im Anspruch 10 erreicht. Der überraschende Vorteil dabei ist, dass eine Prüfung und Vergleich mit einem hinterlegten Referenzwert unmittelbar nach Aufnahme einer Platine bzw. eines Werkteils von einem Stapel durch eine Greifeinrichtung ohne wesentliche Verlängerung einer Taktzeit vorzunehmen ist.

Die Erfindung wird im nachfolgenden anhand der in den Zeichnungen dargestellten Ausführungsbeispiele näher erläutert.

Es zeigen:
- Fig. 1: eine erfindungsgemäße Fertigungseinrichtung mit einer Biegepresse und einem Manipulator und einer Erfassungseinrichtung an einer Armanordnung in vereinfachter Darstellung;
- Fig. 2: eine Detailansicht der Armanordnung mit einer weiteren Variante der Erfassungseinrichtung, teilweise geschnitten;
- Fig. 3: die Armanordnung geschnitten gemäß den Linien III-III in Fig. 2;
- Fig. 4: eine andere Ausbildung für eine Erfassungseinrichtung an der Armanordnung des Manipulators der erfindungsgemäßen Fertigungseinrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

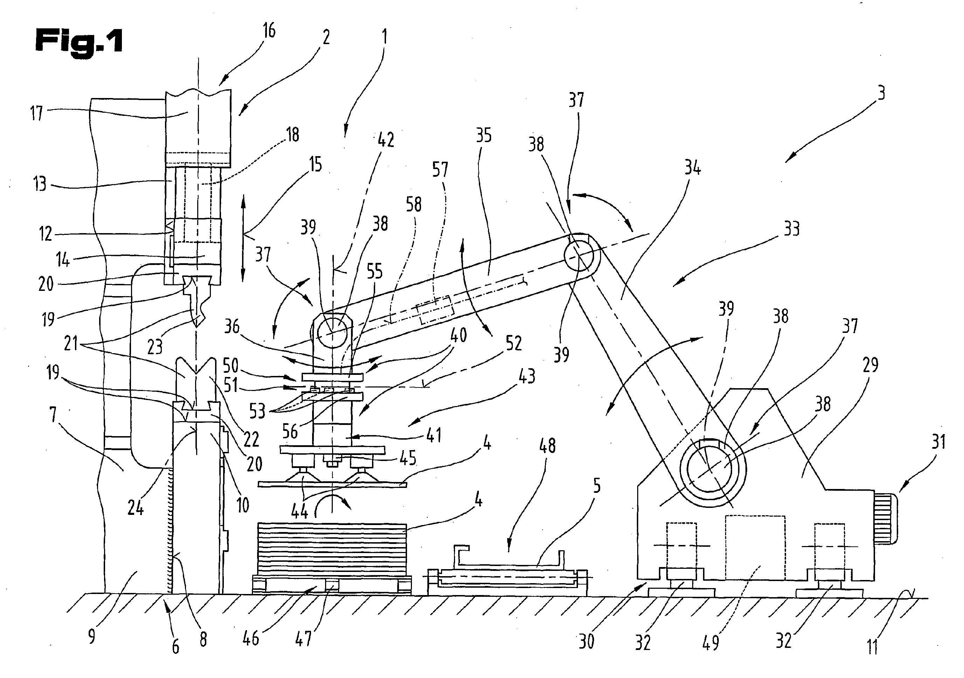

In der Fig. 1 ist eine Fertigungseinrichtung 1, die im wesentlichen aus einer Biegepresse 2, Manipulator 3 besteht und die Fertigung durch Biegeumformung aus Platinen 4 gefertigter Werkteile 5 besteht. Die Platinen 4 werden bevorzugt gestapelt auf einer Palette in einem Operationsbereich des Manipulators 3 bereitgestellt. Die Palette kann beispielsweise auch der Aufnahme der geformten Werkteile 5 dienen, wie es aber auch selbstverständlich möglich ist, die Werkteile 5 für eine Weiterverarbeitung im Transportbehälter, Fördereinrichtungen, etc. nach der Biegeumformung zu übergeben.

Ein Maschinengestell 6 der Biegepresse 2 wird im wesentlichen durch zwei zueinander parallel verlaufende und zueinander beabstandete C-förmige Ständer-Seitenwangen 7 und einem nicht weiter dargestellten Querverband gebildet. An Stirnflächen 8 von Schenkeln 9 der Ständer- Seitenwangen 7 ist ein Tischbalken 10, in zu einer Aufstandsfläche 11 vertikalen Ausrichtung befestigt. An weiteren Schenkeln 12 ist in senkrecht zur Aufstandsfläche 11 ausgerichteten Führungen 13 ein Pressenbalken 14 verstellbar - gemäß Doppelpfeil 15 - gelagert.

Antriebe 16 für den Pressenbalken 14 bilden beispielsweise Hydraulikzylinder 17, wovon zumindest je einer, bevorzugt zwei als Tandemantrieb an den Schenkeln 12 der Ständer-Seitenwangen 7 befestigt sind und jeder über eine Kolbenstange 18 mit dem Pressenbalken 14 antriebsverbunden ist. Auf parallel zueinander und einander gegenüberliegenden parallel zur Aufstandsfläche 11 verlaufenden Stirnflächen 19 des Tischbalkens 10 und des Pressenbalkens 14 sind in Werkzeugaumahmevorrichtungen 20, für das Biegeumformen eines zugeführten Werkteils 4, zusammenwirkende Biegewerkzeuge 21, z.B. ein Biegegesenk 22 und ein Biegestempel 23 zueinander in einer Arbeitsebene 24 fluchtend angeordnet. Bevorzugt werden die Biegewerkzeuge 21 entsprechend dem Bedarf an einer Biegelänge von einer Mehrzahl aneinander gereihter Biegegesenke 22 bzw. Biegestempel 23 gebildet.

Es wird noch darauf hingewiesen, dass selbstverständliche die Biegepresse 2, wie stark vereinfacht dargestellt, über eine Steuereinrichtung 25, Antriebseinrichtung 26 für die Antriebe 16 sowie diverse mit der Steuereinrichtung 25 leitungsverbundene Überwachungseinrichtung, z.B. eine Wegemessereinrichtung, Kraftmessmittel, Verformungsmessmittel und eine nicht weiter dargestellte Sicherheitseinrichtung nach jeweiliger Anforderung ausgestattet ist.

Der Manipulator 3 der Fertigungseinrichtung 1 ist nach dem gezeigten Ausführungsbeispiel über ein, in einem Grundgestell 29 angeordnetes Fahrwerk 30, z.B. Rollenfahrwerk und Fahrantrieb 31, auf oder in der Aufstandsfläche 11 angeordneten Linearführungsbahnen 32 in zur Arbeitsebene 24 der Biegepresse 2 parallel verlaufenden Richtung verfahrbar.

Eine Knickarmanordnung 33 wird durch einen am Grundgestell 29 schwenkbar gelagerten A-Arm 34, einen an diesem schwenkbar gelagerten B-Arm 35 und einem an diesem schwenkbar gelagerten C-Arm 36 gebildet. Schwenklageranordnungen 37 der Knickarmanordnung 33 weisen einzeln gesteuerte Schwenkantriebe 38 auf und verlaufen durch die Schwenklageranordnungen 37 gebildete Schwenkachsen 39 parallel zur Arbeitsebene 24 und der Aufstandsfläche 11.

An einem distalen Ende 40 des C-Arms 36 ist stirnseitig eine Dreheinrichtung 41 angeordnet mit einer zu den Schwenkachsen 39 senkrecht verlaufenden Drehachse 42. Diese ist mit einer Greifeinrichtung 43 zur Handhabung des Werkteils 4 versehen. Beispielsweise wird die Greifeinrichtung 43 durch mit Druck bzw. Vakuum beaufschlagbare Sauggreifer 44 gebildet. Bevorzugt weist die Greifeinrichtung 43 neben der Ausstattung mit den Sauggreifern 44 weiters zur lagerichtigen Aufnahme der Platine 4 bzw. eines bereits teilgebogenen Werkteils 5 eine Werkteil- Identifikations- und/oder Positioniereinrichtung 45 z.B. mit einer CCD- Kamera als Bilderfassungseinrichtung, Beleuchtungsmittel, etc. auf.

Im Greifbereich des Manipulators 3 ist nun weiters eine Platinen- bzw. Werkteilbereitstellung 46, z.B. auf Paletten 47, sowie weiters eine Sammel- oder Abfördervorrichtung 48 für bereits fertig geformte Werkteile 5 vorgesehen.

Möglich ist es den Manipulator 3 mit einer, mit der Steuereinrichtung 25 der Biegepresse 2 leitungs- verbundenen Substeuerung 49 zu betreiben, wie es aber auch möglich ist den Manipulator 3 von der Steuereinrichtung 25 der Biegepresse 2 aus zu betreiben und dazu wie auch zur Energieanspeisung und Versorgung mit einem Druckmedium den Manipulator 3 z.B. über Schleppkabel und Schleppleitungen auszustatten.

Die Knickarmanordnung 33 des Manipulators 3 ist mit zumindest einer Erfassungseinrichtung 50 versehen mit der zumindest ein, eine Zustandsänderung durch die Aufnahme einer Platine 4 bzw. eines Werkteils 5 bewirkender, physikalischer Parameter erfasst wird, z.B. ein Parameter, maßgebend für eine Zug- und/oder Biegebelastung 5 in oder an einem Arm der Knickarmanordnung 33 durch das Gewicht der aufgenommenen Platine 4 oder Werkteil 5.

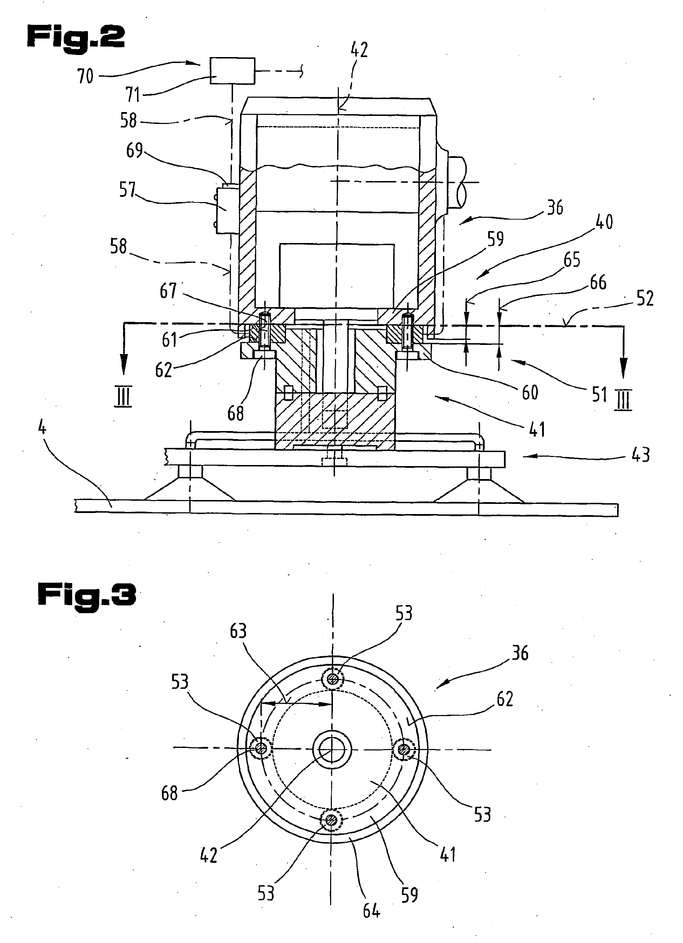

Im gezeigten Ausführungsbeispiel ist die Erfassungseinrichtung 50 zwischen dem C-Arm 36 und der Dreheinrichtung 40 als Messeinrichtung 51 für eine Zugbelastung vorgesehen, die in einer zur Drehachse 41 senkrecht verlaufenden Messebene 52 Quarzsensoren 53 als Messsensoren 54 aufweist. Bevorzugt sind drei Quarzsensoren 53, gleichmäßig um die Drehachse verteilt vorgesehen und sind diese unter einer vorgegebenen Vorspannung zwischen Messplatten 55, 56 angeordnet. Die Messeinrichtung 51 ist mit einer der Messplatten 55 stirnseitig am C-Arm 36 befestigt. An der weiteren Messplatte 56 ist die mit der Greifeinrichtung 43 versehene Dreheinrichtung 40 befestigt. Ein Ladungsverstärker 57 ist für die Ansteuerung der Quarzsensoren 53 und für eine Signalverstärkung und Signalauswertung vorgesehen der über eine Steuerleitung 58 an das Steuerungssystem der Fertigungseinrichtung 1 oder des Manipulators 3 angebunden ist. Bevorzugt wird als Steuerungssystem ein CAN- Bussystem eingesetzt das funktionelle aber auch wirtschaftliche Vorteile durch eine Verringerung des Leitungsaufwandes bietet. In den Fig. 2 und 3 ist eine weitere Ausführungsvariante für eine Anordnung bzw. Ausbildung der Erfassungseinrichtung 50 im Detail gezeigt. Gezeigt ist der Einbau der Erfassungseinrichtung 50 zwischen einem Stirnwandteil 59, der das distale Ende 40 des C-Arms 36 ausbildet und einem Flansch 60 der Dreheinheit 41.

Zwischen einander zugewandten, parallelen Spannflächen 61, 62 des Stirnwandteils 59 und des Flansches 60 sind nach diesem Ausführungsbeispiel in einer Winkelaufteilung von 90° vier der scheibenförmigen Quarzsensoren 53 um die Drehachse 42 in einem gleichen radialen Abstand 63 von dieser angeordnet. Die Quarzsensoren 53 sind vorzugsweise durch eine umlaufende Randwulst 64, welche die Spannfläche 61 überragt, verdeckt und damit geschützt vor Störeinflüssen angeordnet. Eine Höhe 65 der Randwulst 64 ist gering kleiner als eine Dicke 66 der Quarzsensoren 53. Befestigt wird die Dreheinheit 41 am C-Arm 36 über den Flansch 60 mittels die Quarzsensoren 53 in Bohrungen 67 durchragende Spannschrauben 68. Durch diese Anordnung der Spannschrauben 68 welche die Quarzsensoren 53 in ihren Bohrungen 67 durchragen, wird eine exakt vorgebbare Vorspannung der Quarzsensoren 53 erreicht. Vorteilhaft hat sich eine Vorspannkraft von ca. 2 kN in Versuchen herausgestellt.

Die Quarzsensoren 53 sind über die Steuerleitungen 58 mit dem Ladungsverstärker 57, der beispielsweise direkt am C-Arm 36 angeordnet ist, leitungsverbunden und über eine Schnittstelle 69 mit dem Bus-Steuerungssystem der Fertigungseinrichtung 1 verbunden.

Nach der Aufnahme einer Platine 4 bzw. Werkteil 5 durch die Greifeinrichtung 43 wird nach einem geringen Anheben der Hubvorgang unterbrochen. Bevorzugt ist dabei eine Stellung des C-Armes 36 in einer vertikalen Ausrichtung der Längsmittelachse 42 in der die Messebene 52 der Messeinrichtung 51 etwa parallel zur Aufstandsfläche 11 ausgerichtet ist. In dieser Lage wirkt das Gewicht des aufgenommenen Teils, als beispielsweise ein physikalischer Parameter für eine Zustandsänderung eines Armes der Knickarmanordnung 33, der auf die Quarzsensoren 53 einwirkenden Vorspannkraft entgegen und verändert somit die Messsignale der Quarzsensoren 53.

Während eines kurzzeitigen, lageunabhängigen Stillstandes der Armbewegung werden die aktuellen Messsignale der Quarzsensoren 53 erfasst und in einem Rechnermodul 70 ausgewertet und in einer Vergleicherschaltung 71 mit einem Referenzwert, der in einem dem Produktionsvorgang vorgelagerten Lernvorgang mit einer typgleichen Platine 4 bzw. Werkteil 5 ermittelt und in einer Datei hinterlegt wurde, verglichen. Bei Übereinstimmung, wobei eine vorgebbare Toleranzbreite Berücksichtigung findet, ist somit sichergestellt, dass es sich bei der aufgenommenen Platine bzw. Werkteil um die (den) für den Produktionsvorgang auch vorgesehene Platine bzw. Werkteil handelt und es zu keiner Aufnahme mehrerer, z.B. aneinander haftender Platinen 4 oder Werkteile 5 gekommen ist. Wird eine den Toleranzbereich überschreitende Abweichung festgestellt kommt es zu einer Unterbrechung des Produktionsvorganges und einer Fehlermeldung.

Anstelle des oben beschriebenen Lernvorganges vor Beginn der eigentlichen Produktion kann der Referenzwert selbstverständlich auch direkt aus den platinen- bzw. werkteilbezogenen, in der Steuereinrichtung eingespeicherten bzw. einspeicherbaren Produktdaten übernommen werden.

Durch die Anordnung mehrerer der Quarzsensoren 53 und der Auswertung der von diesen abgegebenen Signale ist auch eine verlässliche Ermittlung des physikalischen Parameters der Platine 4 bzw. des Werkteils 5, auch bei einer exzentrischen Aufnahme der Platine 4 bzw. des Werkteils 5 durch die Greifeinrichtung 43, gewährleistet, wie sie zur Umformung in der Biegepresse 2 vielfach auch erforderlich ist.

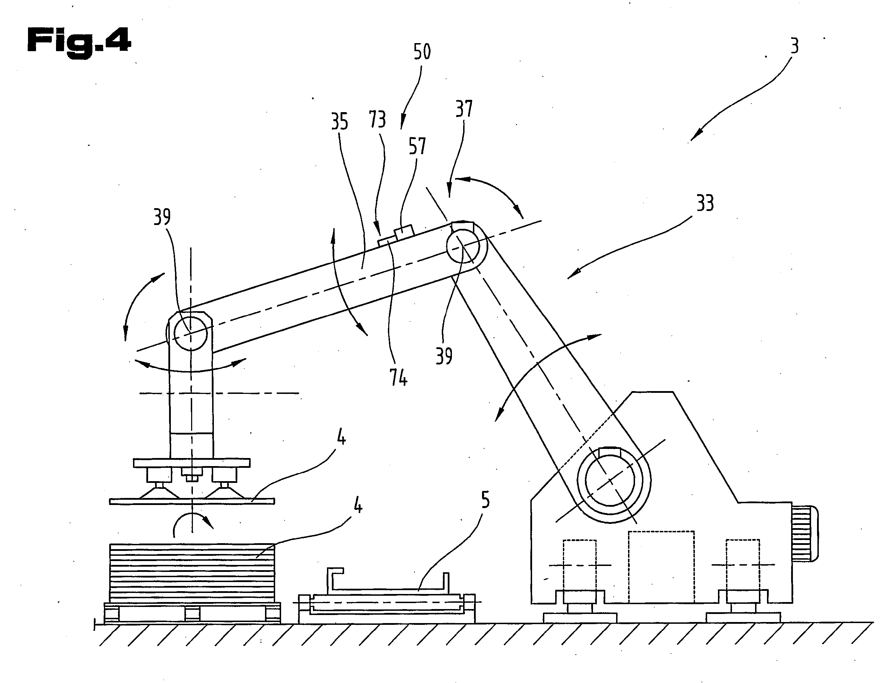

In der Fig. 4 ist eine andere Ausbildung der Erfassungseinrichtung 50 an der Knickarmanordnung 33 des Manipulators 3 für die Beschickung einer nicht weiter dargestellten Biegepresse gezeigt mit der sicher gestellt wird, dass nur eine einzelne Platine 4 einem Umformvorgang zugeführt wird.

Die Erfassungseinrichtung 50, wird dabei gebildet aus einem unmittelbar auf einer Armoberfläche 72, insbesondere des B- Armes 35 im Nahebereich der Schwenklageranordnung 37 angeordnetem Messelement 73 und dem mit dem Steuersystem leitungsverbundenen Ladungsverstärker 57. Das Messelement 73 ist bei dieser Ausbildung bevorzugt ein piezoelektrischer Oberflächendehnungssensor 74. Angeordnet ist dieser auf der in Grundstellung der Knickarmanordnung 33 zur Aufnahme der Platine 4 zugbelasteten Armoberseite des B- Armes 35. Für die Überprüfung ob für den Umformvorgang die Richtige und nur eine Platine 4 bzw. nur ein Werkteil 5 aufgenommen wurde dient als ermittelter physikalischer Wert die Dehnungsänderung durch die von der Platine 4 bzw. dem Werkteil 5 einwirkende Zusatzlast. Diese ermittelte Dehnungsänderung wird wie bereits vorhergehen beschrieben mit einem vorgegebenen, einen Toleranzbereich aufweisenden Referenzwert verglichen. Wird eine darüber hinaus gehende Abweichung festgestellt kann der Beschickungsvorgang sofort unterbrochen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten der Fertigungseinrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Fertigungseinrichtung diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2, 3; 4 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Fertigungseinrichtung
- 2: Biegepresse
- 3: Manipulator
- 4: Platine
- 5: Werkteil

- 6: Maschinengestell
- 7: Ständer-Seitenwange
- 8: Stirnfläche
- 9: Schenkel
- 10: Tischbalken

- 11: Aufstandsfläche
- 12: Schenkel
- 13: Führungen
- 14: Pressenbalken
- 15: Doppelpfeil

- 16: Antriebsanordnung
- 17: Hydraulikzylinder
- 18: Kolbenstange
- 19: Stirnflächen
- 20: Werkzeugaufnahme

- 21: Biegewerkzeug
- 22: Biegegesenk
- 23: Biegestempel
- 24: Arbeitsebene
- 25: Steuer- u. Überwachungseinrichtung

- 26: Antriebseinrichtung
- 29: Grundgestell
- 30: Fahrwerk

- 31: Fahrantrieb
- 32: Laufbahn
- 33: Knickarmanordnung
- 34: A-Arm
- 35: B-Arm

- 36: C-Arm
- 37: Schwenklageranordnung
- 38: Schwenkantrieb
- 39: Schenkachse
- 40: Ende

- 41: Dreheinrichtung
- 42: Drehachse
- 43: Greifeinrichtung
- 44: Sauggreifer
- 45: Werkteil- Identifikations- und/oder Positioniereinrichtung

- 46: Werkteilbereitstellung
- 47: Palette
- 48: Manipulator-Sammelvorrichtung
- 49: Steuerung
- 50: Erfassungseinrichtung

- 51: Messeinrichtung
- 52: Messebene
- 53: Quarzsensor
- 54: Messplatte
- 55: Mess- Gegenplatte

- 57: Ladungsverstärker
- 58: Steuerleitung
- 59: Stirnwandteil
- 60: Flansch

- 61: Spannfläche
- 62: Spannfläche
- 63: Abstand
- 64: Randwulst
- 65: Höhe

- 66: Dicke
- 67: Bohrung
- 68: Spannschraube
- 69: Schnittstelle
- 70: Rechnermodul

- 71: Vergleicherschaltung
- 72: Armoberfläche
- 73: Messelement
- 74: Oberflächendehnungssensor

## Patentansprüche

1. Fertigungseinrichtung (1) für die Biegeumformung von Platinen (4) oder Werkteilen (5), mit einer Biegepresse (2), mit einem feststehenden Tischbalken (10) und einem mit einer Antriebsanordnung (16) relativ zum Tischbalken (10) in Führungen (13) an einem Maschinengestell (6) verstellbaren Pressenbalken (14) und mit auf einander zugewandten Stirnflächen des Tischbalkens (10) und des Pressenbalkens (14) angeordneten Biegewerkzeugen (21) und mit einem in einer Laufbahn parallel zu einer Längserstreckung des Tisch- und Biegebalken (10, 14) verfahrbaren Manipulator (3) für einen Werkteiltransfer zwischen einer Zufuhr - oder Ablagevorrichtung für die Platinen (4) oder der Werkteile (5) und einem Umformbereich zwischen den Biegewerkzeugen (21) und mit zumindest einer Steuer- und Überwachungseinrichtung (25) und der Manipulator (3) eine Knickarmanordnung (33) mit bevorzugt drei über Schwenklageranordnungen (37) um parallel zur Laufbahn ausgerichteten Schwenkachsen (39) schwenkbare Arme (34, 35, 36) aufweist und an einem distalen Ende der Knickarmanordnung (33) eine Dreheinheit (41), mit einer zu den Schwenkachsen (39) senkrecht verlaufenden Drehachse (42), angeordnet ist und die Dreheinheit (41) mit einer Greifeinrichtung (43) bestückt ist, und die Knickarmanordnung (33) zumindest eine, mit der Steuer- und Überwachungseinrichtung (25) kommunikationsverbundene, Erfassungseinrichtung (50) aufweist, **dadurch gekennzeichnet, dass** die Erfassungseinrichtung (50) mit mehreren in einer Messebene (52) angeordneten Messelementen eine Messeinrichtung (51) für einen eine Zustandsänderung eines Armes (34, 35, 36) der Knickarmanordnung (33) bei Belastung bewirkenden physikalischen Wert bildet und die Messebene (52) zwischen dem distalen Ende (40) der Knickarmanordnung (33) und der Dreheinheit (41) verläuft.

2. Fertigungseinrichtung (1) nach Anspruch 1, **dadurch gekennzeichnet, dass** die Messelemente der Messeinrichtung (51) mit einem Ladungsverstärker (57) leitungsverbunden sind.

3. Fertigungseinrichtung (1) nach Anspruch 1 oder 2, **dadurch gekennzeichnet, dass** die Messelemente durch scheibenförmige Quarzsensoren (53) gebildet sind.

4. Fertigungseinrichtung (1) nach Anspruch 1, **dadurch gekennzeichnet, dass** die Messebene (52) in einer zu der Drehachse (42) der Dreheinrichtung (41) senkrecht verlaufenden Teilungsebene verläuft.

5. Fertigungseinrichtung (1) nach Anspruch 3, **dadurch gekennzeichnet, dass** die Quarzsensoren (53) unter einer Vorspannkraft zwischen einander gegenüberliegenden, parallel zur Messebene verlaufenden Spannflächen (61, 62) z.B. einer Messplatte (54) und einer Mess-Gegenplatte (55) gespannt sind.

6. Fertigungseinrichtung (1) nach Anspruch 3, dass die Quarzsensoren (53) zwischen einem Stirnwandteil (59) des C- Armes (36) und einem Flansch (60) der Dreheinrichtung (41) unter Vorspannung gehaltert sind.

7. Fertigungseinrichtung (1) nach Anspruch 3, **dadurch gekennzeichnet dass** die Quarzsensoren (53) in der Messebene (52) in Form eines regelmäßigen Vielecks angeordnet sind.

8. Fertigungseinrichtung (1) nach Anspruch 2, dadurch dass der Ladungsverstärker (57) über eine Schnittstelle (69) mit dem Steuerungssystem der Fertigungseinrichtung (1) leitungsverbunden ist.

9. Fertigungseinrichtung (1) nach Anspruch 1, **dadurch gekennzeichnet dass** die Erfassungseinrichtung busfähig insbesondere Can- busfähig ausgebildet ist.

10. Verfahren zur Zustandsüberwachung einer Knickarmanordnung (33) eines Manipulators (3) zur Beschickung einer Biegepresse (2) für einen Umformvorgang an einer Platine (4) oder einem Werkteil (5), wobei der Manipulator (3) für einen Werkteiltransfer zwischen einer Zufuhr- oder Ablagevorrichtung für die Platinen (4) oder die Werkteile (5) und einem Umformbereich zwischen den Biegewerkzeugen (21) in einer Laufbahn parallel zu einer Längserstreckung des Tisch- und Biegebalkens (10, 14) der Biegepresse (2) verfahrbar ist, wobei die Knickarmanordnung (33) über Schwenklageranordnungen (37) um parallel zur Laufbahn ausgerichteten Schwenkachsen (39) schwenkbare Arme (34, 35, 36) aufweist und an einem distalen Ende der Knickarmanordnung (33) eine Dreheinheit (41), mit einer zu den Schwenkachsen (39) senkrecht verlaufenden Drehachse (42), angeordnet ist und die Dreheinheit (41) mit einer Greifeinrichtung (43) bestückt ist und die Knickarmanordnung (33) zumindest eine, mit einer Steuer- und Überwachungseinrichtung (25) kommunikationsverbundene, Erfassungseinrichtung (50) aufweist, die mit mehreren in einer Messebene (52) angeordneten Messelementen eine Messeinrichtung (51) für einen eine Zustandsänderung eines Armes (34, 35, 36) der Knickarmanordnung (33) bei Belastung bewirkenden physikalischen Wert bildet und wobei die Messebene (52) zwischen dem distalen Ende (40) der Knickarmanordnung (33) und der Dreheinheit (41) verläuft, wobei ein zur Erfassung vorgesehener, eine Zustandsänderung durch Aufnahme einer Platine (4) oder eines Werkteils (5) durch die Greifeinrichtung (43) in der Knickarmanordnung (33) bewirkender physikalischer Parameter in einer Datei eines Rechnermoduls (70) hinterlegt wird und nach Aufnahme der Platine (4) oder des Werkteils (5) der durch die Erfassungseinrichtung (50) ermittelte physikalische Parameter mit dem hinterlegten Parameter in einer Vergleicherschaltung (71) verglichen wird und bei einer ein festgelegtes Toleranzfeld überschreitenden Abweichung der Beschickungsvorgang abgebrochen wird und eine Fehlermeldung abgegeben wird.

## Claims

1. Production device (1) for the bending deformation of boards (4) or workpieces (5), comprising a bending press (2), a fixed table beam (10) and a press beam (14) adjustable by means of a drive arrangement (16) relative to the table beam (10) in guides (13) on a machine frame (6) and comprising bending tools (21) arranged on facing end faces of the table beam (10) and the press beam (14), and a manipulator (3) which can be driven in a track parallel to a longitudinal extension of the table and bending beams (10, 14) for the transfer of a workpiece between a feeding or stacking device for the boards (4) or workpieces (5), and a shaping area between the bending tools (21), and with at least one control and monitoring device (25), and the manipulator (3) has a bending arm arrangement (33) with preferably three arms (34, 35, 36) pivotable via pivot bearing arrangements (37) about pivot axes (39) aligned parallel to the running track, and disposed on a distal end of the bending arm arrangement (33) is a rotational unit (41) with a rotational axis (42) running perpendicular to the pivot axes (39) and the rotational unit (41) is fitted with a gripping device (43), and the bending arm arrangement (33) has at least one detecting device (50) connected by communication to the control and monitoring device (25), **characterised in that** the detecting device (50) with several measuring elements arranged in a measurement plane (52) forms a measuring device (51) for a physical value causing a change in state of an arm (34, 35, 36) of the bending arm arrangement (33) upon loading, and the measurement plane (52) runs between the distal end (40) of the bending arm arrangement (33) and the rotational unit (41).

2. Production device (1) according to claim 1, **characterised in that** the measuring elements of the measuring device (51) are connected by line to a charge amplifier (57).

3. Production device (1) according to claim 1 or 2, **characterised in that** the measuring elements are formed by disc-like quartz sensors (53).

4. Production device (1) according to claim 1, **characterised in that** the measurement plane (52) runs in a joint face running perpendicular to the rotational axis (42) of the rotational device (41).

5. Production device (1) according to claim 3, **characterised in that** the quartz sensors (53) are tensioned by a pretensioning force between opposite tensioning surfaces (61, 62) running parallel to the measurement plane, e.g. a measuring plate (54) and a measuring counter plate (55).

6. Production device (1) according to claim 3, **characterised in that** the quartz sensors (53) are pretensioned between an end face part (59) of the C-arm (36) and a flange (60) of the rotational device (41).

7. Production device (1) according to claim 3, **characterised in that** the quartz sensors (53) are arranged in the measurement plane (52) in the form of a regular polygon.

8. Production device (1) according to claim 2, **characterised in that** the charge amplifier (57) is line-connected via an interface (69) to the control system of the production device (1).

9. Production device (1) according to claim 1, **characterised in that** the detecting device is designed to be bus capability in particular CAN bus capability.

10. Method for monitoring the state of a bending arm arrangement (33) of a manipulator (3) for loading a bending press (2) for performing a shaping process on a board (4) or a workpiece (5), and the manipulator (3) can be displaced in order to transfer a workpiece between a feeding or stacking device for the boards (4) or workpieces (5) and a shaping area between the bending tools (21) in a running track parallel to a longitudinal extension of the table and bench beam (10, 14) of the bending press (2), and the bending arm arrangement (33) has arms (34, 35, 36) pivotable by means of pivot bearing arrangements (37) about pivot axes (39) aligned parallel to the running track, and disposed on a distal end of the bending arm arrangement (33) is a rotational unit (41) with a rotational axis (42) running perpendicular to the pivot axes (39) and the rotational unit (41) is fitted with a gripping device (43), and the bending arm arrangement (33) has at least one detecting device (50) connected by communication to a control and monitoring device (25), which, with several measuring elements arranged in a measurement plane (52), forms a measuring device (51) for a physical value causing a change in state of an arm (34, 35, 36) of the bending arm arrangement (33) upon loading, and the measurement plane (52) runs between the distal end (40) of the bending arm arrangement (33) and the rotational unit (41), and a physical parameter provided for detection purposes causing a change in state due to a board (4) or a workpiece (5) being picked up by the gripping device (43) in the bending arm arrangement (33) is stored in a file of a computer module (70), and after picking up the board (4) or the workpiece (5) the physical parameter determined by the detection device (50) is compared with the saved parameter in a comparator circuit (71) and in the case of a deviation exceeding a fixed tolerance range the loading process is stopped and an error message is given.

## Revendications

1. Installation de fabrication (1) pour la déformation par pliage de platines (4) ou de pièces (5), avec une plieuse (2), avec une poutre de table fixe (10) et avec un sommier de pression (14) ajustable avec un agencement d'entraînement (16) relativement à la poutre de table (10) dans des guidages (13) à un châssis de machine (6), et avec des outils de pliage (21) disposés sur des faces frontales orientées l'une vers l'autre de la poutre de table (10) et du sommier de pression (14), et avec un manipulateur (3) déplaçable dans une voie de roulement parallèlement à une extension longitudinale des poutres de table et de pression (10, 14) pour un transfert de pièces entre un dispositif d'amenée ou de dépôt des platines (4) ou des pièces (5) et une zone de déformation entre les outils de pliage (21), et avec au moins une installation de commande et de surveillance (25), et le manipulateur (3) présente un agencement de bras coudés(33) avec de préférence trois bras (34, 35, 36) aptes à pivoter par trois agencements de palier de pivotement (37) autour d'axes de pivotement (39) orientés parallèlement à la voie de roulement, et à une extrémité distale de l'agencement de bras coudés(33), une unité de rotation (41) avec un axe de rotation (42) s'étendant perpendiculairement aux axes de pivotement (39) est disposée, et l'unité de rotation (41) est munie d'une installation de préhension (43), et l'agencement de bras coudés (33) présente au moins une installation de détection (50) reliée en communication à l'installation de commande et de surveillance (25), **caractérisée en ce que** l'installation de détection (50) forme avec plusieurs éléments de mesure disposés dans un plan de mesure (52) une installation de mesure (51) d'une valeur physique entraînant sous charge une modification de l'état d'un bras (34, 35, 36) de l'agencement de bras coudés (33), et le plan de mesure (52) s'étend entre l'extrémité distale (40) de l'agencement de bras coudés (33) et l'unité de rotation (41).

2. Installation de fabrication (1) selon la revendication 1, **caractérisée en ce que** les éléments de mesure de l'installation de mesure (51) sont reliés de manière conductrice à un amplificateur de charge (57).

3. Installation de fabrication (1) selon la revendication 1 ou 2, **caractérisée en ce que** les éléments de mesure sont formés par des capteurs de quartz (53) en forme de disque.

4. Installation de fabrication (1) selon la revendication 1, **caractérisée en ce que** le plan de mesure (52) s'étend dans un plan de division s'étendant perpendiculairement à l'axe de rotation (42) de l'installation de rotation (41).

5. Installation de fabrication (1) selon la revendication 3, **caractérisée en ce que** les capteurs de quartz (53), sous une force de précontrainte, sont contraints entre des faces de tension (61, 62) opposées l'une à l'autre, s'étendant parallèlement au plan de mesure, par exemple d'une plaque de mesure (54) et d'une contre-plaque de mesure (55).

6. Installation de fabrication (1) selon la revendication 3, **caractérisée en ce que** les capteurs de quartz (53) sont retenus entre une partie de paroi frontale (59) du bras en C (36) et une bride (60) de l'installation de rotation (41) sous précontrainte.

7. Installation de fabrication (1) selon la revendication 3, **caractérisée en ce que** les capteurs de quartz (53) sont disposés dans le plan de mesure (52) sous la forme d'un polygone régulier.

8. Installation de fabrication (1) selon la revendication 2, **caractérisée en ce que** l'amplificateur de charge (57) est relié de manière conductrice par une interface (69) au système de commande de l'installation de fabrication (1).

9. Installation de fabrication (1) selon la revendication 1, **caractérisée en ce que** l'installation de détection est réalisée avec une fonction bus, en particulier une fonction bus Can.

10. Procédé pour la surveillance de l'état d'un agencement de bras coudés (33) d'un manipulateur (3) pour l'alimentation d'une plieuse (2) pour une déformation à une platine (4) ou une pièce (5), où le manipulateur (3) est déplaçable pour un transfert de pièces entre un dispositif d'amenée ou de dépôt pour les platines (4) ou les pièces (5) et une zone de déformation entre les outils de pliage (31) dans une voie de roulement parallèlement à une extension longitudinale de la poutre de table et de pression (10, 14) de la plieuse (2), où l'agencement de bras coudés (33) présente des bras (34, 35, 36) aptes à pivoter par des agencements de palier de pivotement (37) autour d'axes de pivotement (39) orientés parallèlement à la voie de roulement, et à une extrémité distale de l'agencement de bras coudés (33) est disposée une unité de rotation (41), avec un axe de rotation (42) s'étendant perpendiculairement aux axes de pivotement (39), et l'unité de rotation (41) est pourvue d'une installation de préhension (43), et l'agencement de bras coudés (33) présente au moins une installation de détection (50) en liaison de communication avec une installation de commande et de surveillance (25), qui forme avec plusieurs éléments de mesure disposés dans un plan de mesure (52) une installation de mesure (51) pour une valeur physique entraînant sous charge une modification de l'état d'un bras (34, 35, 36) de l'agencement de bras coudés (33), et où le plan de mesure (52) s'étend entre l'extrémité distale (40) de l'agencement de bras coudés (33) et l'unité de rotation (41), où un paramètre physique prévu pour la détection, entraînant une modification de l'état par la réception d'une platine (4) ou d'une pièce (5) par l'installation de préhension (43) dans l'agencement de bras coudés (33) est stocké dans un fichier du module de calculateur (70) et, après la réception de la platine (4) ou de la pièce (5), le paramètre physique détecté par l'installation de détection (50) est comparé avec le paramètre stocké dans un circuit de comparaison (71) et, lors d'un écart dépassant un champ de tolérance déterminé, l'opération d'alimentation est interrompue, et un message d'erreur est émis.
